# EUROPEAN PATENT SPECIFICATION

(11) **EP 0 524 167 B1**
(45) Date of publication and mention of the grant of the patent: **25.09.1996**
(21) Application number: 90907194.6
(22) Date of filing: 11.04.1990
(51) Int. Cl.: F16L 21/02

(54) **ADAPTOR SET COMPRISING A PIPING COMPONENT WITH A SPIGOT END**
ADAPTERSATZ MIT EINEM ROHRELEMENT MIT EINSTECKENDE
JEU D'ADAPTEURS COMPORTANT UN ELEMENT DE TUYAUTERIE A EMBOUT MALE

(43) Date of publication of application: 27.01.1993
(73) Proprietor: Forsheda AB, S-330 12 Forsheda (SE)
(72) Inventor: Vilhelmsen, Mogens, DK-8600 Silkeborg (DK)
(74) Representative: Linde, Leif
(86) International application number: DK9000095
(87) International publication number: WO9115703

(56) References cited:
- DE-A- 1 425 468
- DE-A- 3 522 790
- SE-B- 328 446
- SE-B- 403 650
- SE-B- 445 132
- US-A- 2 052 713

## Description

### TECHNICAL FIELD

The present invention relates to an adaptor set comprising a piping component, said set being of the kind set forth in the preamble of claim 1.

### BACKGROUND ART

Until now it has been a problem when e.g. laying drainage pipelines, that the side openings in wells or pipes with large diameter and the end openings in muffs on e.g. muff pipes has necessitated the use of spigots of varying shape and size.

### DISCLOSURE OF THE INVENTION

It is the object of the present invention to indicate the construction of an adaptor set of the kind initially referred to, that may be adapted to different openings of the kind mentioned, so that in many cases it is sufficient to use piping components with spigot ends of the same type, and this object is achieved with an adaptor set, according to the present invention exhibiting the features set forth in the characterizing clause of claim 1. With this arrangement, it is possible to use the step surface as an abutment surface, either for the spacing collar, the side of which facing away from the step surface constituting an abutment surface for a sealing member, or, after removing the spacing collar, directly as an abutment surface for a sealing member placed in an opening of the kind referred to. In this manner the "effective length" of the spigot end may be adapted to suit the requirement existing in each case.

In a preferred use of the adaptor set with the spacing collar remaining in place, to be described in more detail below, both the internal and external surfaces of the spacing collar are also active in forming a sealed joint.

Pipes with spigot ends having features resembling those set forth in items a and b of claim 1 are known from Figure 3 in DE-A-1.425.468, and this Figure also discloses the use of a spacer ring placed in abutment with the step surface. It should be noted, however, that this publication solely refers to a completed pipe joint and contains no mention of an adaptor set, with which it is possible to alter the effective length of the insertion portion of the spigot by removing the spacing collar and using the spigot without it, thus making it possible to adapt the spigot to different conditions of use as mentioned in the previous paragraph.

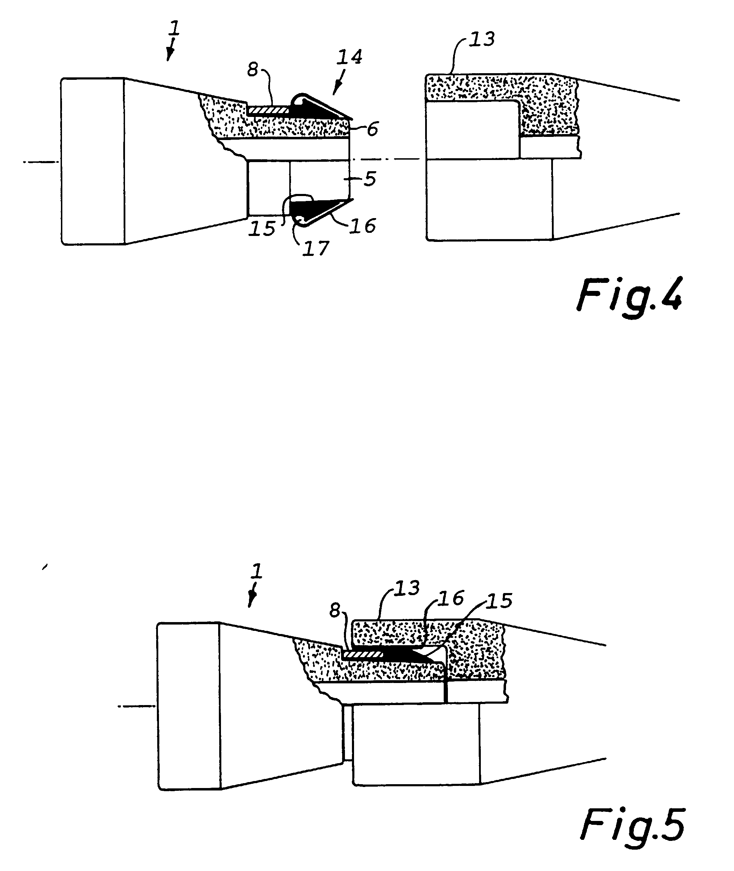

DE-A-3.522.790 discloses with reference to its Figure 4 a spigot end intended to constitute a part of a pipe joint also having features resembling those set forth in items a and b of claim 1. Further, this spigot end comprises a tape or band used to reduce the effective radial height of the step surface to make it easier for a sealing ring in the form of a rolling ring with circular cross section to roll over the outer edge of the step surface. The document does not state that the embodiment of the spigot end shown in its Figure 4 may be used with a spacing collar of lesser axial width than and instead of the tape or band covering substantially the whole of the axial extent of the circumferential spigot surface, or without either.

Advantageous embodiments of the adaptor set, the effects of which - beyond of what is obvious - are explained in more detail in the following detailed portion of the present specification, are set forth in claims 2 and 3.

### BRIEF DESCRIPTION OF THE DRAWINGS

In the following detailed specification, the present invention will be explained in more detail with reference to the exemplary embodiment of an adaptor set according to the present invention shown in the drawing, in which
Figure 1 in elevation and partly in section shows an adaptor set consisting of a piping component and a spacing collar inserted on it,
Figure 2 shows the piping component without a spacing collar, ready to be inserted into an opening in a wall,
Figure 3 shows the same as Figure 2, but with the spigot end of the piping component inserted in the opening,
Figure 4 shows a piping component equipped with a spacing collar and a pipe seal, ready to be connected to the muff end of a pipe, and
Figure 5 shows the same as Figure 4, but after the connection has been established.

### DESCRIPTION OF THE PREFERRED EMBODIMENT

The exemplary embodiment of an adaptor set according to the present invention shown in the drawing comprises a connection piece 1, in the following termed a muff component, consisting in a manner known in principle of a short body portion 2, the end of which shown to the left in the drawing constitutes a muff 3, of which further details are not shown, while the end shown to the right in the drawing is constituted by a spigot 4, the latter being the part, to which the present invention is directed. The muff component consists in the usual manner of concrete, but the present invention may with the same effect be used on muff components consisting of other materials.

The surfaces on the spigot 4 of interest to the present invention are
- a radially outwardly facing surface 5, in the following termed a circumferential surface, extending from the end face 6 on the spigot 4 to
- a step 7 lying substantially in a radial plane.

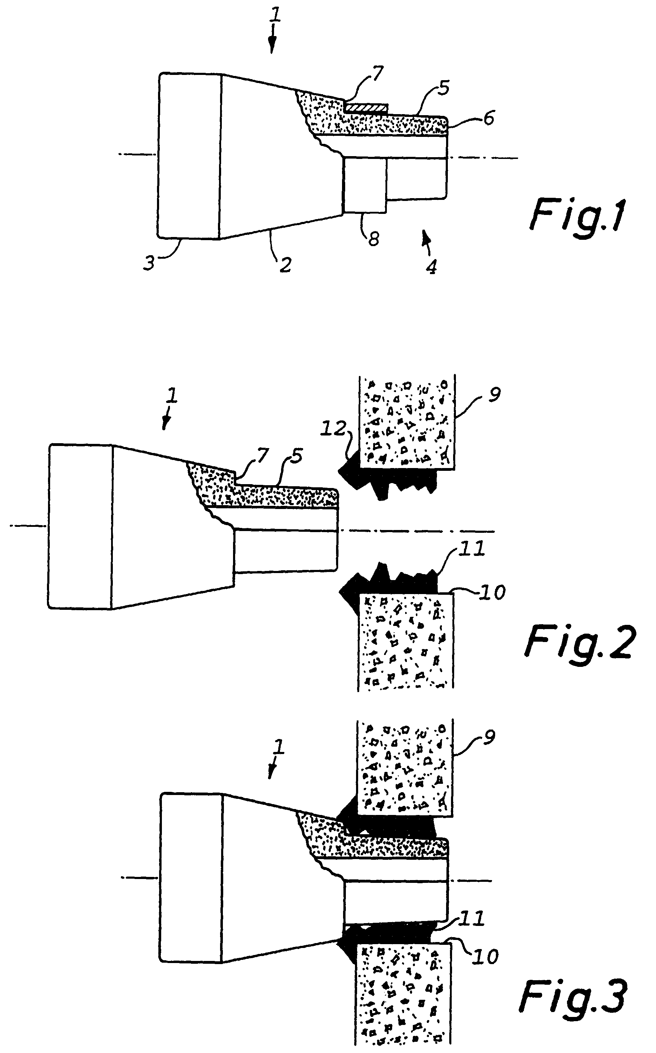

As shown in Figure 1, a detachable spacing collar 8 of a material with a hardness corresponding to semi-stiff rubber, is inserted on the circumferential surface 5, so that the collar 8 may be inserted on the circumferential surface 5 with a fit, on the one hand sufficiently tight to prevent the ring from falling off, but on the other hand sufficiently loose to make it possible to remove the collar without effort, when this is required. The assembly shown in figure 1 consisting of the muff component 1 and the spacing collar 8 constitutes the adaptor set, which is intended to be delivered to the user in the condition shown.

Figures 2 and 3 show an example of how the muff component 1 may be used, when a pipe line, the remaining parts of which are not shown, is to be connected to a drainage well, a large pipe or the like, in the wall 9 of which an opening 10 has been bored for the purpose. In order to achieve a fluid-tight connection, a sealing ring 11 of rubber or rubber-like material is inserted in the opening 10, said ring being shaped with various projections and recesses, e.g. in a manner known from the bore seal produced and marketed by the applicant with the designation "F 910". The present invention is, however, of course not limited to the use of a sealing ring of precisely this shape.

In order to make it possible to utilize the sealing ring 11 in its full axial width, the spacing collar 8 has been removed, so that in the situation shown in Figure 2, the circumferential surface 5 is exposed to the full extent of its length. When the muff component 1 is inserted in the opening 10, i.e. moved from the position shown in Figure 2 to that shown in Figure 3, the various projections on the sealing ring 11 will engage the circumferential surface 5 in a sealing and holding manner, and finally, the step 7 on the muff component 1 abuts against an oppositely facing projection 12 on the sealing ring 11, so that direct contact between the muff portion 1 and the wall 9 does not take place at any point. At the same time, the spigot 4 is prevented from projecting undesiredly far into the well or pipe bounded by the wall 9.

Figures 4 and 5 show how the muff component 1 may be used when establishing a fluid-tight connection with a muff 13 on one end of a pipe, otherwise not shown in detail.

In this application, the spacing collar 8 is allowed to remain, and on the part of the circumferential surface 5, which is not covered by the spacing collar 8, a "self-lubricating" pipe seal 14 is inserted; this seal may be of the same kind as the one produced and marketed by the applicant under the designation "Forsheda 124", or a similar kind.

Thus, the pipe seal 14 consists of a structural compression portion 15, which at the end facing away from the end face 6 continues in a circumferential gliding sheath 16, whereas a lubricant indicated by 17 is placed in the space between the compression portion 15 and the gliding sheath 16.

When the muff component 1 is inserted in the muff 13 with a view to establishing a liquid-tight connection, i.e. when it is moved from the position shown in Figure 4 to that shown in Figure 5 relative to the muff 13, the gliding sheath 16 will engage the inside of the muff 13, thus together with the compression portion 15 constituting a sliding bearing for the relative movement, the lubricant 17 providing the requisite lubrication.

In the connection position shown in Figure 5, the end face 6 will have abutted against the bottom of the muff 13, and the compression portion 15 is sufficiently compressed to provide the desired sealing and holding effect, whilst the gliding sheath 16 has been pushed "rearwardly" through a distance, so that part of it is supported by the spacing collar 8.

Thus, in the connecting situation shown in Figure 5, not only is direct contact between the two pipe-line connections avoided in the sealing region, but it is also avoided that the radially inwardly facing side of the double-folded portion of the gliding sheath 16 engages the relatively coarse and hard concrete surface of the muff component 1, engaging instead the smooth and somewhat yielding spacing collar 8, so that the risk of the gliding sheath 16 being torn to pieces in this location is substantially reduced. A further advantage achieved "for free" by using the spacing collar 8 is that its radial thickness may be adapted with a view to achieving a gentle contact with the double-folded gliding sheath 16. It is also possible to use a pipe seal without a gliding sheath, in which case the spacing collar 8 may be made somewhat thicker in order to engage the muff 13.

Whilst the above description only relates to two possible areas of application of the present invention, many others may be contemplated. Thus, the spacing collar 8 may be shaped with different axial widths with a view to adapting it to other forms for connection, e.g. when placing the spigot in an opening in a wall, which is thinner than the wall 9 shown in Figures 2 and 3, when it is not desired that the spigot is to project in beyond the wall.

In the exemplary embodiment described above and shown in the drawing, the circumferential surface 5 is slightly tapered with a taper of approximately 2°, this being in many cases preferred, inter alia with a view to removing the muff component from the casting mold. The present invention may, however, also be applied to a purely cylindrical circumferential surface.

By comparing the two embodiments shown in Figures 2, 3 and 4, 5 respectively, it will be seen that in the former embodiment, the primary sealing function lies closer to the step 7 than the end face 6, whilst it in the latter case lies closer to the end face 6 than the step 7. This is, of course, due to the shape and location of the sealing means in question, and may in a given case be varied to suit existing requirements.

## Claims

1. Adaptor set comprising an adaptor in the form of a pipe (1) of concrete or other hard material and of the kind comprising at one end a muff (3) for connection to a spigot on a pipe, and at the opposite end a spigot (4) for insertion in an opening in a muff on the end of a pipe or a connecting piece or in an opening in the side of a pipe, a well or the like with a view to liquid-tight connection to same, said spigot at least comprising
a) a radially outwardly facing surface (5),
b) a step surface (7) shaped immediately adjacent to said radially outwardly facing surface (5) and extending substantially radially outwardly from the end of the radially outwardly facing surface (5) situated at the greatest distance from the free end (6) of the spigot, and
c) a detachable spacing collar (8) inserted or insertable on the radially outwardly facing surface (5) and abutting or abuttable against said step surface (7),
d) the detachable spacing collar being a ring having substantially less axial width than the radially outwardly facing surface (5) and consisting of a material with a hardness corresponding to that of semi-stif rubber, and fitting on the radially outwardly facing surface (5) sufficiently loose to be removable therefrom without effort.

2. Adaptor set according to claim 1, characterized in that the radially outwardly facing surface (5) is tapered, diverging from said free end (6) at an angle relative to the axis of between 1 and 3°, preferably approximately 2°.

3. Adaptor set according to claim 1 or 2, characterized in that the spacing collar (8) is dimensioned in such a manner, that it may be inserted on the radially outwardly facing surface (5) with a tight fit, possibly whilst tangentially stretching the collar or a part thereof.

## Patentansprüche

1. Zusammengesetzter Adapter mit einem Adapter in Form eines Rohres (1) aus Beton oder anderem harten Material und an einem Ende mit einer Muffe (3) für die Verbindung mit einem Einsteckende an einem Rohr und an dem entgegengesetzten Ende mit einem Einstekkende (4) für die Einführung in eine Öffnung in einer Muffe an dem Ende eines Rohres oder einem Verbindungsstück oder in eine Öffnung in der Seite eines Rohres, einem Schacht oder dergleichen mit dem Ziel einer flüssigkeitsdichten Verbindung mit demselben, wobei das Einsteckende zumindest
(a) eine radial nach außen gerichtete Oberfläche (5),
(b) eine Stufenfläche (7), die unmittelbar an die radial nach außen gerichteten Oberfläche (5) angrenzt und sich von dem Ende der radial nach außen gerichteten Oberfläche (5), das sich am weitesten entfernt von dem freien Ende (6) des Einsteckendes befindet, im wesentlichen radial nach außen erstreckt, und
(c) eine abnehmbare Abstandshalterschulter (8), die auf der radial nach außen gerichteten Oberfläche (5) eingefügt oder einfügbar ist und an der Stufenfläche (7) anliegt oder anliegen kann, umfaßt,
(d) wobei die abnehmbare Abstandshalterschulter ein Ring ist, der eine wesentlich geringere axiale Weite hat als die radial nach außen gerichtete Oberfläche (5) und aus einem Material besteht, das eine Härte hat, die halbsteifem Gummi entspricht, und ausreichend lokker auf die radial nach außen gerichtete Oberfläche (5) paßt, um von dieser ohne Anstrengung entfernbar zu sein.

2. Zusammengesetzter Adapter nach Anspruch 1, dadurch gekennzeichnet, daß die radial nach außen gerichtete Oberfläche (5) sich verjüngt und dabei von dem freien Ende (6) in einem Winkel in bezug auf die Achse zwischen 1 und 3°, vorzugsweise ungefähr 2° divergiert.

3. Zusammengesetzter Adapter nach Anspruch 1 oder 2, dadurch gekennzeichnet, daß die Abstandshalterschulter (8) so bemessen ist, daß sie auf der radial nach außen gerichteten Oberfläche (5) mit festem Paßsitz eingefügt werden kann, gegebenenfalls unter Tangentialdehnung der Schulter oder eines Teiles davon.

## Revendications

1. Jeu d'adaptateur comprenant un adaptateur en forme de tuyau (1) en béton ou en un autre matériau dur et du type qui comporte un about femelle (3) en une extrémité pour raccordement à l'about mâle d'un autre tuyau et, en l'extrémité opposée, un about mâle (4) à insérer dans l'ouverture d'un about femelle se trouvant en l'extrémité d'un tuyau ou d'une pièce de liaison ou bien dans une ouverture ménagée dans le côté d'un tuyau, d'un puisard ou autre en vue d'un raccordement étanche aux liquides avec ce dernier, ledit about mâle comprenant au moins:
a) une surface (5) tournée radialement vers l'extérieur,
b) une surface en gradin (7) formée pour être immédiatement adjacente à ladite surface (5) tournée radialement vers l'extérieur et s'étendant sensiblement radialement vers l'extérieur depuis l'extrémité de la surface (5) tournée radialement vers l'extérieur qui est située à la plus grande distance de l'extrémité libre (6) de l'about mâle, et
c) un collier d'espacement amovible (8) inséré ou insérable sur la surface (5) tournée radialement vers l'extérieur et butant ou pouvant venir buter contre ladite surface en gradin (7),
d) le collier d'espacement amovible étant une bague qui a une largeur axiale sensiblement inférieure à la surface (5) tournée radialement vers l'extérieur, qui est faite d'un matériau dont la dureté correspond à celle d'un caoutchouc semi-rigide et qui s'emboîte sur la surface (5) tournée radialement vers l'extérieur avec suffisamment de jeu pour pouvoir en être retirée sans effort.

2. Jeu d'adaptateur selon la revendication 1, caractérisé en ce que la surface (5) tournée radialement vers l'extérieur est conique, divergeant de ladite extrémité libre (6) en faisant par rapport à l'axe un angle compris entre 1 et 3° et valant de préférence approximativement 2°.

3. Jeu d'adaptateur selon la revendication 1 ou 2, caractérisé en ce que le collier d'espacement (8) est dimensionné de telle manière qu'il puisse être inséré sur la surface (5) tournée radialement vers l'extérieur par ajustage à frottement dur, éventuellement avec un étirement tangentiel du collier ou d'une partie de celui-ci.
